# EUROPEAN PATENT APPLICATION

(11) **EP 2 175 640 A1**
(43) Date of publication of application: **14.04.2010**
(21) Application number: 08790390.2
(22) Date of filing: 06.08.2008
(51) Int. Cl.: H04N 5/44, H04M 9/00, H04N 5/76, H04N 5/765, H04N 5/91, H04N 7/173, H04N 7/18

(54) **RECORDER**

(30) Priority: 09.08.2007 JP 2007207583
(71) Applicant: Panasonic Corporation, Kadoma-shi Osaka 571-8501 (JP)
(72) Inventor: NAGAI, Takahiro, Osaka-shi, Osaka 540-6207 (JP); TANABE, Naohisa, Osaka-shi, Osaka 540-6207 (JP)
(74) Representative: Grünecker, Kinkeldey, Stockmair & Schwanhäusser Anwaltssozietät
(86) International application number: PCT/JP2008/002126
(87) International publication number: WO 2009/019867

(57) **Abstract**

A video recorder includes at least one broadcast receiver for receiving broadcast data, a captured image receiver for receiving captured image data captured by the camera device, a storage unit capable of storing the broadcast data received by the broadcast receiver and the captured image data received by the captured image receiver, and an information storage unit for storing, when the storage unit does not store received data though the captured image receiver has received the captured image data, event occurrence information related to such a situation.

## Description

### TECHNICAL FIELD

The present invention relates to a device for recording television images, and more particularly, to a video recorder used in connection with a camera device so as to record images received from the camera device.

### BACKGROUND ART

Devices for recording and playing back TV programs and other image information (hereinafter, "video recorders") have been conventionally used in households, and more multifunctional video recorders are growing in popularity in recent years. One reason for this is that the development of digital technology has allowed computerized information to be recorded at high density in various recording media such as magnetic tapes, CDs, DVDs, HDDs, and semiconductor memories. As a result, video recorders are used in wider fields.

The development of digital technology not only allows the recording and playing back of TV programs and commercially available contents, but also accelerates systematizing and networking information which is treated in households. As one example, a door phone as a device for informing by issuing a sound that a visitor has arrived can be connected to a camera device so that the user can visually recognize the visitor. As another example, a home security system is becoming more and more popular, which monitors and protects the house and its premises from burglary using a camera device.

The present invention relates to a technique for using a video recorder in connection with a camera device in a household network system. The most important technical issue in this technique is to make all devices connected to the network system perform their functions in liaison with each other, allowing effective use of these functions.

There are some disclosed examples of devices using a plurality of functions in liaison with each other. One example shows a portable telephone device with TV function, which has a broadcast reception function and a communication function (see, for example, Patent Literature 1). In this example, when a call to the communication device is detected during the reception of a broadcast, there are two alternatives. One is to store the broadcast being received, and the other is to display a message indicating whether the broadcast being received should be stored or not. This example gives priority to the communication function as the main function over the broadcast reception function. More specifically, this example only takes measures to continue the broadcast reception function while it is being interrupted by the communication function and to reuse the stored broadcast data. Therefore, the uses of the connect function (broadcast reception) never changes according to the status of use of the communication function as the main function.

Another example shows a camera-equipped portable telephone having a temporarily storage area for temporarily storing the latest image and a moving image storage area for continuously storing moving images so as to use the information received from the camera device. Of the moving image data stored in the temporary storage area, only the data desired by the user is copied and stored in the moving image storage area in response to the information to stop photo-shooting (stop event) (see, for example, Patent Literature 2).

Further another example shows a method for calculating and setting the frame rates of a plurality of camera devices used in an imaging system based on the information received from a sensor so as to optimize hardware resources (see, for example, Patent Literature 3).

The disclosed examples each show the functions when the device is used alone, and do not regard the device as a component of the system or do not consider the cooperation and effective use of the functions of the device and the other devices connected to the system. Therefore, the disclosed examples do not show how a video recorder, when connected to camera devices in a household network system, uses the information received from the camera devices, thus failing to achieve the cooperation and effective use of the functions of the video recorder and the camera devices.
Patent Literature 1: Japanese Patent Unexamined Publication No. 2007-116524
Patent Literature 2: Japanese Patent Unexamined Publication No. 2005-151071
Patent Literature 3: Japanese Patent Unexamined Publication No. 2005-45550

### SUMMARY OF THE INVENTION

The video recorder connected to a camera device according to the present invention includes at least one broadcast receiver for receiving broadcast data, a captured image receiver for receiving captured image data captured by the camera device, a storage unit capable of storing the broadcast data received by the broadcast receiver and the captured image data received by the captured image receiver, and an information storage unit for storing, when the storage unit does not store the captured image data though the captured image receiver has received the captured image data, event occurrence information related to such a situation.

With this structure, when the user has a visitor while recording a broadcast program and the image of the visitor has been received from the camera device, the captured image cannot be recorded. Even so, the storage unit can store event occurrence information such as a message indicating that an image has been received from the camera device. The information notifies the user that he/she had a visitor during his/her absence even though the captured image of the visitor was not recorded. This results in achieving the cooperation and effective use of the functions of the video recorder and the camera device, thereby providing an inexpensive high- and multi-functional video recorder used in a household network system.

### BRIEF DESCRIPTION OF THE DRAWINGS

Fig. 1 shows an example of a layout of main devices including a video recorder according to a first exemplary embodiment of the present invention.
Fig. 2 is a block diagram showing the basic structure of the video recorder.
Fig. 3 is a flowchart showing the operation procedure of the video recorder.
Fig. 4 is a schematic diagram showing an example of a function of the video recorder.
Fig. 5 is a schematic diagram showing an example of another function of the video recorder.
Fig. 6 is a block diagram showing the basic structure of a video recorder according to a second exemplary embodiment of the present invention.
Fig. 7 is a flowchart showing the operation procedure of the video recorder.
Fig. 8 is a time chart showing frame rates while the video recorder is operating.
Fig. 9 is a block diagram showing the basic structure of a video recorder according to a third exemplary embodiment of the present invention.
Fig. 10 is a time chart showing frame rates while the video recorder is operating.

### Reference marks in the drawings

1, 101, 201 video recorder
2 living room
3 television
4 router
5, 10, 17 PLC adapter
6, 11, 18 plug
7, 12, 19 wall outlet
8 power line
9 door phone master unit
13 entrance
14 door phone camera
15 person (human, visitor)
16 network camera
110, 120 recording processing unit
111, 121 timer recording unit
112, 122 video recording unit
113, 123 tuner
130 event occurrence information recording processing unit
131 notification unit
133 decimating processing unit (frame rate determination unit)
134 buffer memory (delay unit)
140 storage unit
141 information storage unit
150 network adapter
151 interface unit
152 receiver
153, 193, 293 transmitter
154 thumbnail image creating unit
160 control unit
161 detection unit
162 determination unit
163 instruction unit
170, 173 switching unit
171, 172, 174 selector
180 terminal unit
181 antenna
190 door phone system
191, 291 camera device
192, 292 signal processing unit
290 home security system
401 event history of the door phone
402 event information
403 message information
404, 406 time-of-occurrence information
407 thumbnail image
408 reason-for-inability-of-recording screen
501 display unit
502 symbol display
503 display lamp

### DETAILED DESCRIPTION OF PREFERRED EMBODIMENTS

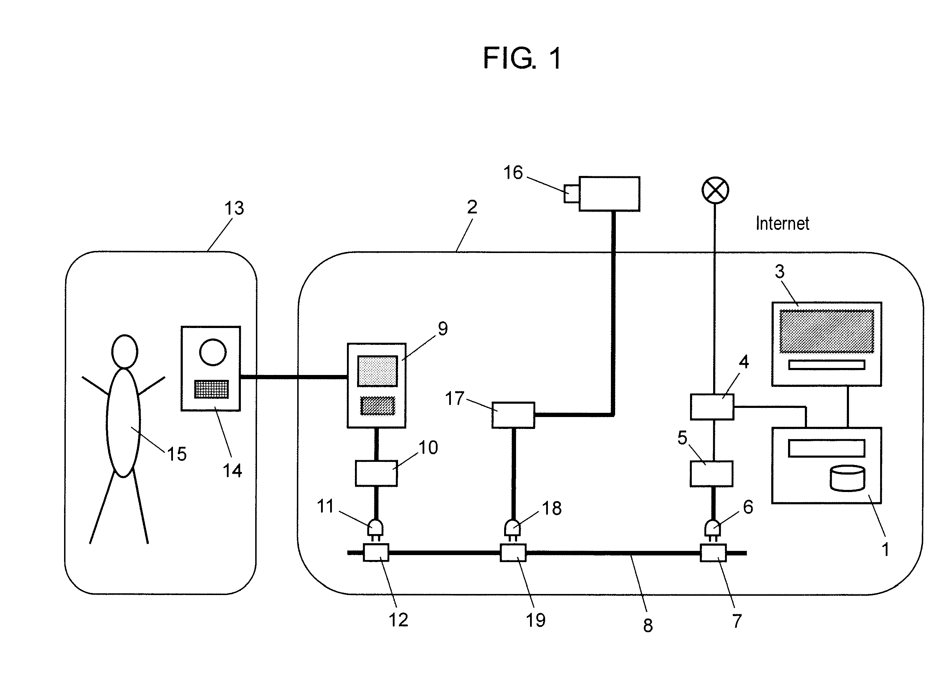

Exemplary embodiments of the present invention will be described as follows with reference to Figs. 1 to 10. Note that the numerical values used in the following description are one example, and do not limit the present invention thereto.

### FIRST EXEMPLARY EMBODIMENT

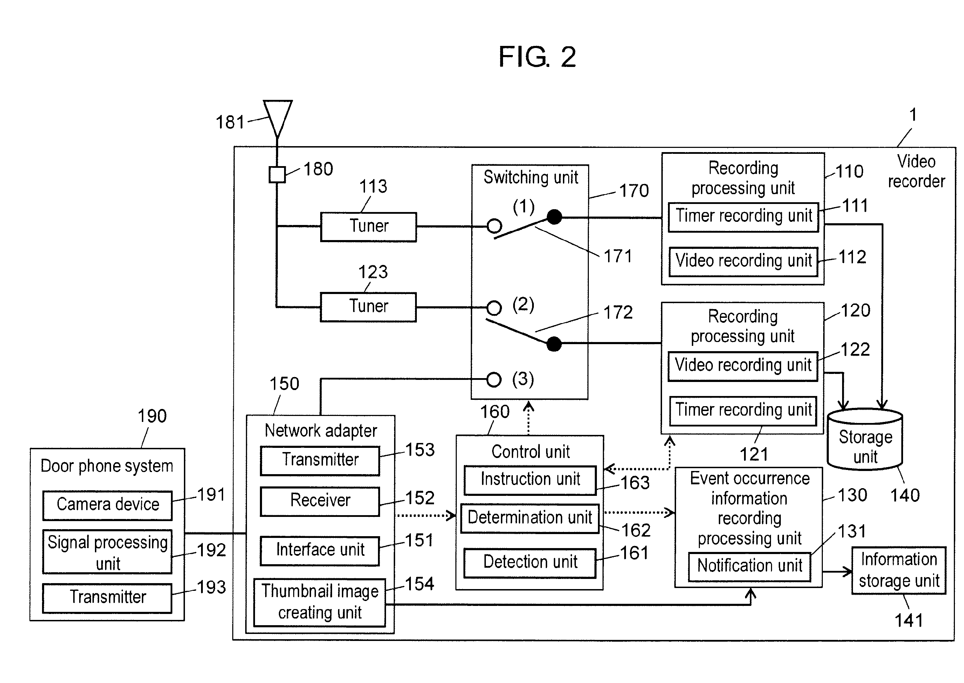

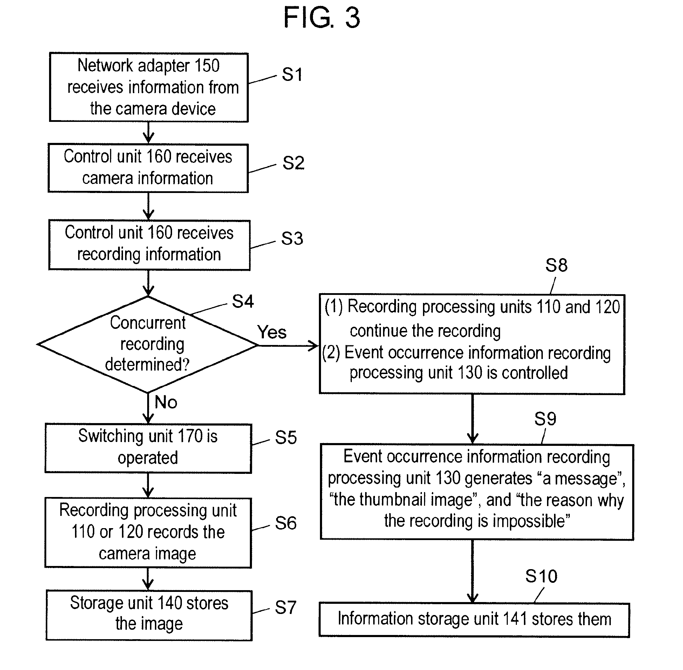

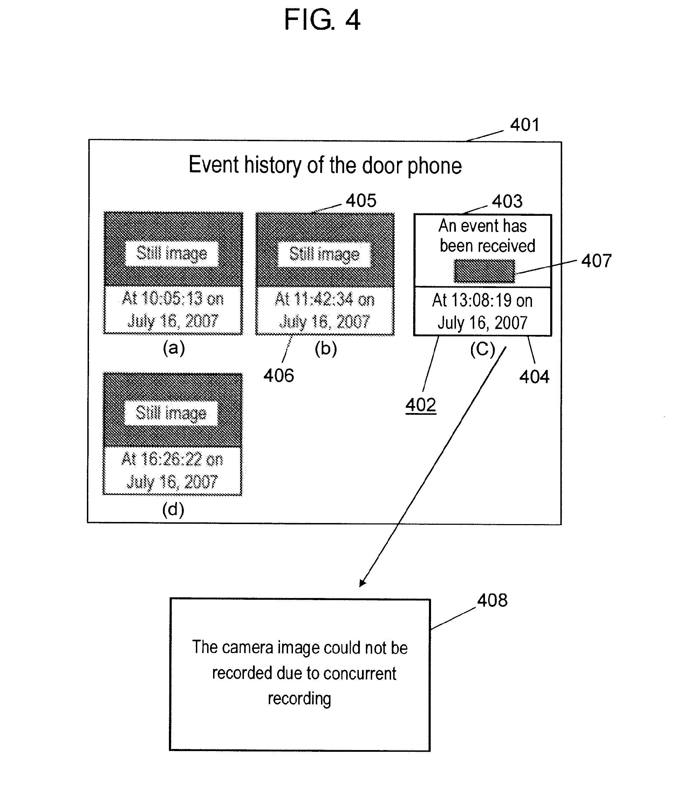

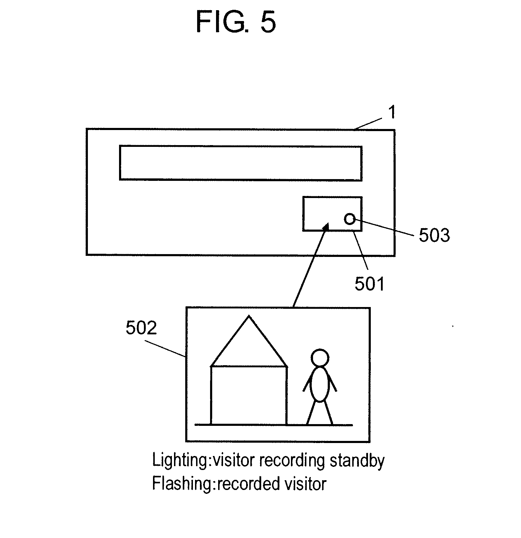

Fig. 1 shows an example of a layout of main devices including video recorder 1 according to a first exemplary embodiment of the present invention. Fig. 2 is a block diagram showing the basic structure of video recorder 1. Fig. 3 is a flowchart showing the operation procedure. Figs. 4 and 5 are schematic diagrams showing examples of functions of video recorder 1.

The following is a description of a case shown in Fig. 1 in which video recorder 1 is connected to a camera device in a household network system using a power line communication (hereinafter, "PLC") .

As shown in Fig. 1, video recorder 1 is connected to television device (hereinafter, abbreviated as "television") 3, and is also connected to household power line 8 via router 4, PLC adapter 5, plug 6, and wall outlet 7 in living room 2 of a house. Living room 2 is equipped with door phone master unit 9 as a system for attending to person 15 (a visitor, for example), and connected to power line 8 via PLC adapter 10, plug 11, and wall outlet 12. Entrance 13 of the house is equipped with door phone camera 14 as a camera device, which is connected to door phone master unit 9. The house is equipped in its surrounding area, a garden, or other site with network camera 16 as another camera device, which is connected to power line 8 via PLC adapter 17, plug 18, and wall outlet 19.

The following is a description, with reference to Fig. 2, of the basic structure and functions of video recorder 1.

Video recorder 1 includes two recording processing units 110 and 120, event occurrence information recording processing unit 130, storage unit 140 as a storing means, information storage unit 141 for recording event occurrence information, network adapter 150, control unit 160 as a controlling means, switching unit 170, tuners 113 and 123 as broadcast receivers, and terminal unit 180. First recording processing unit 110 is switchably connected at its input to first tuner 113, second tuner 123, and network adapter 150 via switching unit 170, and is connected at its output to storage unit 140. The same holds true for second recording processing unit 120. Network adapter 150 can be connected to recording processing units 110 and 120 via switching unit 170, and is connected to event occurrence information recording processing unit 130 via control unit 160. Event occurrence information recording processing unit 130 is connected to information storage unit 141, and door phone system 190 is connected to network adapter 150 of video recorder 1.

Recording processing unit 110 includes timer recording unit 111 as a timer recoding means and video recording unit 112 as a recording means. After antenna 181 receives broadcast data, and tuner 113 or 123 selects television images, recording processing unit 110 can record the selected television images by via switching unit 170. Recording processing unit 110 can make timer recording unit 111 perform timer recording. Similarly, recording processing unit 120 includes timer recording unit 121 and video recording unit 122, and can record the television images selected by tuner 113 or 123 via switching unit 170. Recording processing unit 120 can make timer recording unit 121 perform timer recording.

Network adapter 150 includes interface unit 151, receiver 152 as a captured image receiver, transmitter 153, and thumbnail image creating unit 154. Network adapter 150 can receive captured image data from door phone system 190 and transmit it to control unit 160, or to recording processing units 110 and 120 via switching unit 170. Thumbnail image creating unit 154 has a function of creating a thumbnail image (still image) by reducing the size of the captured image of person 15 received from door phone system 190 to the amount corresponding to (120 × 80 pixels, for example). Such a thumbnail image can be created at the timing immediately after door phone camera 14 begins capturing images, when, for example, person 15 pushes the buzzer or the like. The image size and the timing of creating the thumbnail image are not particularly limited. Thumbnail image creating unit 154 is not necessarily placed in network adapter 150, and can be placed in door phone system 190 or other locations.

Switching unit 170 can be switched to (1), (2), and (3). Selectors 171 and 172 are normally connected to (1) and (2), respectively. Recording processing unit 110 gives priority to the recording of the output of first tuner 113, and recording processing unit 120 gives priority to the recording of the output of second tuner 123.

Control unit 160 includes detection unit 161, determination unit 162, and instruction unit 163. Detection unit 161 can receive information about door phone system 190 from network adapter 150, and also receive information about broadcast recording from recording processing units 110 and 120. Although not shown in Fig. 2, when video recorder 1 has a function of playing back a DVD or other media, control unit 160 can receive information about the condition of playing back. Control unit 160 can also receive information about the congestion condition of network 8 to which video recorder 1 is connected, and about the condition of resources such as CPU and memory provided in video recorder 1.

Determination unit 162 can determine requirements to be controlled, based on the above-mentioned received information. Instruction unit 163 can instruct and control the operations of switching unit 170, recording processing units 110 and 120, and event occurrence information recording processing unit 130 based on the determination result of determination unit 162.

Event occurrence information recording processing unit 130 includes notification unit 131, and can read information about display stored in notification unit 131 and store it to information storage unit 141. Event occurrence information recording processing unit 130 can also receive the thumbnail image of captured image data captured by door phone system 190 from thumbnail image creating unit 154 of network adapter 150, and store it to information storage unit 141. Thumbnail images having a smaller amount of information than captured images can be recorded without using hardly any of the resources of video recorder 1, and hence, without consuming hardly any of the capacity of information storage unit 141.

When determination unit 162 of control unit 160 determines that the captured image data from door phone system 190 cannot be recorded, the reason why recording is impossible can also be stored in information storage unit 141. The recording of the captured image data becomes impossible in the following cases. One case is when selectors 172 and 173 of switching unit 170 are connected to (1) and (2), respectively, that is, "concurrent recording". Another case is, as described above, when video recorder 1 runs out of resources because a DVD is being played back. Another case is when the user, who is viewing images via the Internet, causes network 8 to be congested, making it impossible for door phone system 190 to transmit captured image data.

Door phone system 190 including camera device 191, signal processing unit 192, and transmitter 193. Door phone system 190 can perform signal processing to transmit images captured by the camera to the network, allowing the captured image data of human 15 at the entrance to be transmitted to video recorder 1 installed in living room 2 via door phone master unit 9 and network adapter 150.

The following is a description, with reference to Fig. 3, of the operation procedure of video recorder 1.

First, at entrance 13, when visitor 15 pushes the buzzer or other similar device of door phone system 190, door phone system 190 is activated, allowing camera device 191 to begin capturing images. Signal processing unit 192 applies signal processing such as JPEG compression to the captured image data received from camera device 191 together with notification and other information so that they can be transmitted to the network. Transmitter 193 transmits the notification information and the captured image data to network adapter 150 of video recorder 1 via door phone master unit 9. In network adapter 150, receiver 152 receives via interface unit 151 a notification indicating that door phone system 190 has been activated and the captured image data of visitor 15 captured by the camera device (Step 1, which is abbreviated as S1. The same holds true for the subsequent steps).

Network adapter 150 generates information for notifying that camera device 191 has been activated based on the received information, and transmits it to control unit 160. Control unit 160 receives the information (S2). Control unit 160 makes detection unit 161 confirm the condition of broadcast recording in recording processing units 110 and 120 based on the information received from network adapter 150, and acquire recording information therefrom (S3).

Next, control unit 160 makes determination unit 162 determine whether recording processing units 110 and 120 are recording concurrently or not (S4). When the determination result indicates "no concurrent recording" (No), control unit 160 makes instruction unit 163 operate switching unit 170 to switch selector 171 or 172 to the connecting position (3) so as to connect network adapter 150 to recording processing unit 110 or 120 (S5). Then, control unit 160 makes instruction unit 163 instruct recording processing unit 110 or 120 to record the captured image data received from network adapter 150. Recording processing unit 110 or 120 records the image of visitor 15 captured by camera device 191 in accordance with the instructions from control unit 160 (S6), and stores it to storage unit 140 (S7).

When the determination result of determination unit 162 indicates "concurrent recording" (Yes), on the other hand, control unit 160 gives priority to recording in recording processing units 110 and 120. More specifically, control unit 160 does not change the connection condition in switching unit 170 and allows recording processing units 110 and 120 to continue the recording. Control unit 160 makes instruction unit 163 instruct and control the operation of event occurrence information recording processing unit 130 in order to process the information received from door phone system 190 (S8). Event occurrence information recording processing unit 130 generates, based on the instruction information from control unit 160, a display message, the thumbnail image received from thumbnail image creating unit 154 of network adapter 150, and the reason why the recording of the camera image is impossible ("concurrent recording" in this case) (S9). Event occurrence information recording processing unit 130 then stores them to information storage unit 141 (S10).

Fig. 4 shows display examples of event history 401 of the door phone. In Fig. 4, event information 402 (a), (b), and (d) show display examples in which recording processing units 110 and 120 are not recording concurrently, so that the image received from camera device 191 is successfully recorded. Event information 402 (c) shows a display example in which recording processing units 110 and 120 are recording concurrently, so that the captured image data received from camera device 191 cannot be recorded. In Fig. 4, event information 402 (a), (b), and (d) display, for example, the first still image 405 of the stored image and time-of-occurrence information 406 of the event. When the user selects, for example, still image 405 using a attached remote control (not shown) or the like, the moving image of event information 402 (b) that has been captured by camera device 191 and then stored in storage unit 140 is automatically played back in the display region of still image 405. As a result, the user can easily confirm event information 402 (a), (b), and (d).

Event information 402 (c), on the other hand, displays message information 403 such as "an event has been received" and thumbnail image 407 instead of a still image, and time-of-occurrence information 404 of an event. Adding thumbnail image 407 allows the user to recognize the visitor. The displayed event information 402 (a), (b), (c), and (d) are stored intact in information storage unit 141. Alternatively, it is possible to display reason-for-inability-of-recording screen 408 showing a message indicating the reason why the captured image data captured by camera device 191 could not be recorded. Reason-for-inability-of-recording screen 408 can be displayed when the user selects event information 402 (c) using an attached remote control or the like and performs a predetermined operation. As a result, the user can understand the reason why the captured image data could not be recorded.

Fig. 5 shows a display example of an visitor recording function of the door phone system of video recorder 1 (hereinafter, "visitor recording function"). Video recorder 1 includes display unit 501 for the "visitor recording function". Display unit 501 includes symbol display 502 and display lamp 503. When the "visitor recording function" of video recorder 1 is in a standby state or operating, display lamp 503 lights. When event information 402 is stored in "event history 401 of the door phone" shown in Fig. 4, the display lamp flashes to call the user's attention.

It is possible for video recorder 1 to further include a copy unit for copying an image received from the camera device from information storage unit 141 to another storage medium so as to copy an image stored in information storage unit 141 to another storage medium. This can back up the recorded images and extend the storage period, thus achieving a reliable, highly functional video recorder.

In the above description, the captured image captured by of the surveillance camera is stored in the storage unit using JPEG compression, but it goes without saying that the compression format is not limited to JPEG format.

The event information can include a failure history of the camera device besides the time-of-occurrence information of events.

In the above description, storage unit 140 for recording broadcast data or the moving images captured by the door phone camera is provided separately from information storage unit 141 for recording event information, but these two units can be combined into a single storage unit.

As described hereinbefore, according to the first exemplary embodiment of the present invention, when an image is received from the camera device during the recoding of broadcast data, it is possible to continue the recording of broadcast data and to store in information storage unit 141 a message indicating that an image has been received from the camera device, a thumbnail image, and event occurrence information such as the reason for inability of recording. This allows the cooperation and effective use of the functions of the video recorder and the camera device, thus providing a high- and multi-functional video recorder that can be used in a household network system.

### SECOND EMBODIMENT

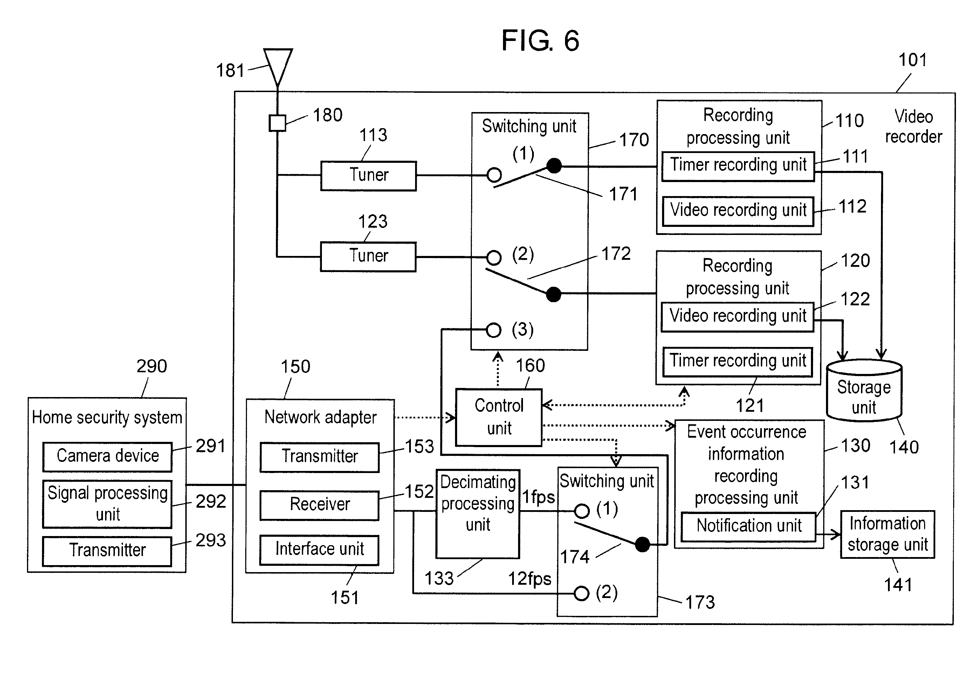

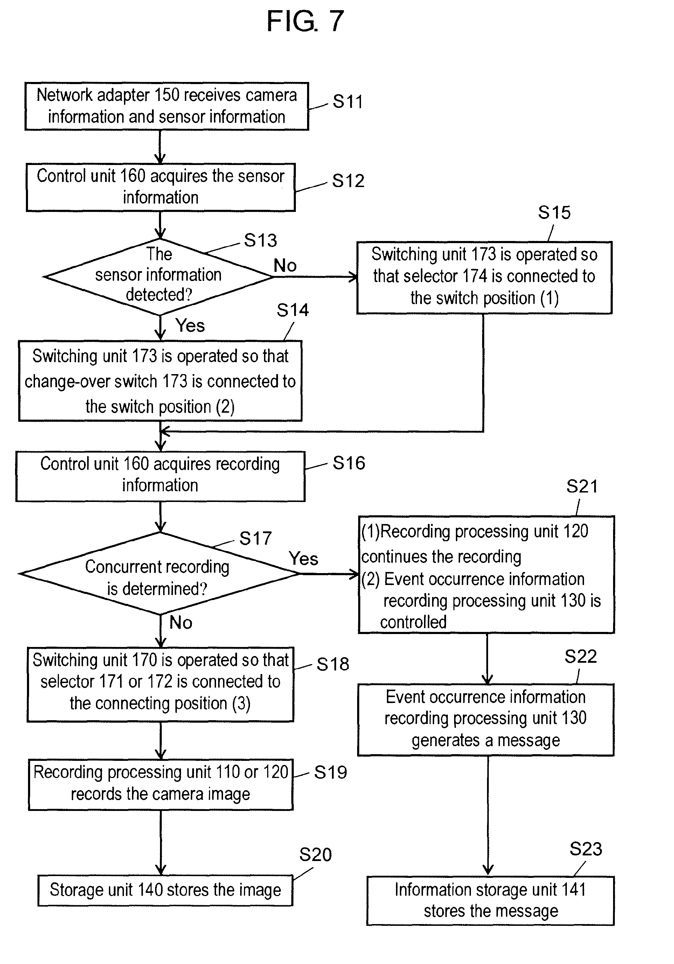

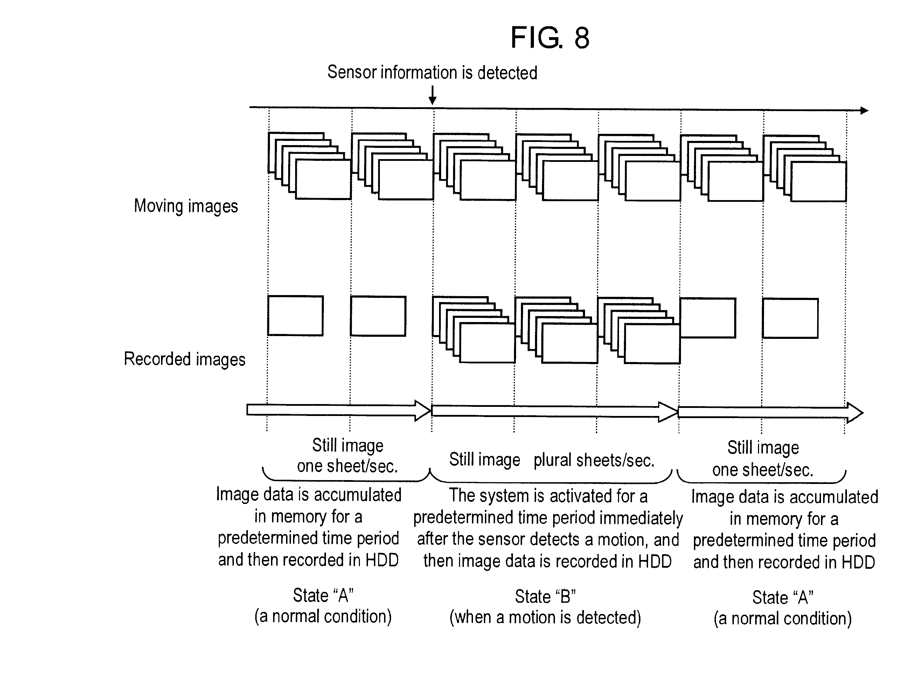

Video recorder 101 according to a second exemplary embodiment of the present invention will be described as follows with reference to Figs. 6 to 8. In the present exemplary embodiment, a surveillance camera is used to monitor the condition of the house and its surrounding area instead of providing a door phone, and the camera information is stored in a HDD or the like of the video recorder. In the case of a surveillance camera, unlike a door phone, storing all images from the camera in the HDD may consume the recording capacity, possibly making it impossible to record TV programs. This situation is avoided by providing the camera device with a sensor for detecting changes in monitoring images, and when the sensor detects a motion, the image from the camera is recorded at a normal frame rate (12 fps), otherwise at a lower frame rate (1 fps, for example). Fig. 6 is a block diagram showing the basic structure of video recorder 101 according to the second exemplary embodiment. Fig. 7 is a flowchart showing the operation procedure thereof, and Fig. 8 is a time chart showing frame rates while video recorder 101 is operating.

As shown in Fig. 6, video recorder 101 includes between network adapter 150 and switching unit 170, in addition to the components of video recorder 1, switching unit 173 as a second switching means and decimating processing unit (frame rate determination unit) 133 for changing the record rate at which image data is stored in storage unit 140. The other components are nearly the same as those in the first exemplary embodiment, and hence, labeled with the same numerals and the description thereof will be omitted.

As shown in Fig. 6, camera device 291 of home security system 290 is connected to video recorder 101, while camera device 191 of door phone system 190 is connected to video recorder 1. Home security system 290 includes camera device 291, signal processing unit 292, and transmitter 293. Their structures and functions are the same as those of door phone system 190.

Switching unit 173 includes two switch positions (1) and (2). When selector 174 is connected to the switch position (1), network adapter 150 can be connected to recording processing units 110 and 120 via decimating processing unit 133. When selector 174 is connected to the switch position (2), network adapter 150 can be directly connected to recording processing units 110 and 120.

Decimating processing unit 133 receives captured image data from network adapter 150, and changes the frame rate by decimating the received captured image data at a constant rate. This decimating process can be achieved by, for example, writing the captured image data to the embedded memory at a frame rate of 12 fps, and reading them at a frame rate of 1 fps.

The operation procedure of video recorder 101 will be described as follows with reference to Fig. 7.

First, network adapter 150 receives camera information and sensor information from camera device 291 of home security system 290 (Step S11). Home security system 290 transmits sensor information from camera device 291 when a motion change is detected by the sensor or other detecting means (not shown) of camera device 291 installed in the surrounding area of the house or in a garden.

Next, control unit 160 acquires the sensor information (S12), and determines based on the sensor information whether a motion change has been detected (S13). When a motion change is not detected (No), video recorder 101 sets selector 174 of switching unit 173 to the switch position (1) in accordance with the instructions from control unit 160, and connects network adapter 150 and recording processing units 110 or 120 via decimating processing unit 133. Decimating processing unit 133 changes the captured moving image data (12 fps) received from network adapter 150 to the frame rate (1 fps) at which images are stored (S 15).

On the other hand, when a motion change is detected (Yes) by the sensor or other detecting means (not shown) of camera device 291 installed in the surrounding area of the house or in the garden, video recorder 101 sets selector 174 of switching unit 173 to the switch position (2) in accordance with the instructions from control unit 160, and connects network adapter 150 directly to recording processing unit 110 or 120. As a result, the captured moving image data (12 fps) received from network adapter 150 is transmitted intact to recording processing unit 110 or 120 (S 14). Then, control unit 160 confirms the condition of broadcast recording in recording processing units 110 and 120 based on the information received from network adapter 150, and acquires recording information from recording processing units 110 and 120 (S16).

Next, control unit 160 makes determination unit 162 determine whether recording processing units 110 and 120 are recording concurrently or not (S17). When the determination result indicates "no concurrent recording" (No), control unit 160 makes instruction unit 163 operate switching unit 170 to switch selector 171 or 172 to the connecting position (3) so as to connect network adapter 150 to recording processing unit 110 or 120 (S18). Then, control unit 160 makes instruction unit 163 instruct recording processing unit 110 or 120 to record the information received from network adapter 150. Recording processing unit 110 or 120 records the image received from camera device 291 in accordance with the instructions from control unit 160 (S19), and stores it to storage unit 140 (S20).

When the determination result of determination unit 162 indicates "concurrent recording" (Yes), on the other hand, control unit 160 gives priority to recording in recording processing units 110 and 120. More specifically, control unit 160 does not change the connection condition in switching unit 170 and allows recording processing units 110 and 120 to continue the recording. Control unit 160 makes instruction unit 163 instruct and control the operation of event occurrence information recording processing unit 130 in order to process the information received from home security system 290 (S21). Event occurrence information recording processing unit 130 generates a display message based on the instruction information from control unit 160 (S22), and stores it to information storage unit 141 (S23).

Fig. 8 shows a display example of frame rates in state "A" (a normal condition) and state "B" (when a motion is detected) in decimating processing unit 133. The frame rate in decimating processing unit 133 can be determined by the criteria which are different depending on the time of day. This approach can deal with changes in the usage environment depending on the time of day properly and efficiently, thus achieving a highly efficient, highly functional video recorder.

In the present exemplary embodiment, the capacity to store images captured from the camera device is reduced by changing the frame rate, but may alternatively be reduced by changing the compressibility of images or decimating the number of pixels of the captured images.

In the above description, storage unit 140 for recording broadcast data or the moving images captured by the door phone camera is provided separately from information storage unit 141 for recording event information, but these two units can be combined into a single storage unit.

As described hereinbefore, according to the second exemplary embodiment of the present invention, it is possible to determine the frame rate based on changes in the information from the sensor that has been detected an abnormality, and then to record the captured image received from the camera device. This results in requiring a smaller capacity of storage unit 140 to store recorded image information, and also extending the life of storage unit 140, thus achieving a highly efficient, long life video recorder.

### THIRD EMBODIMENT

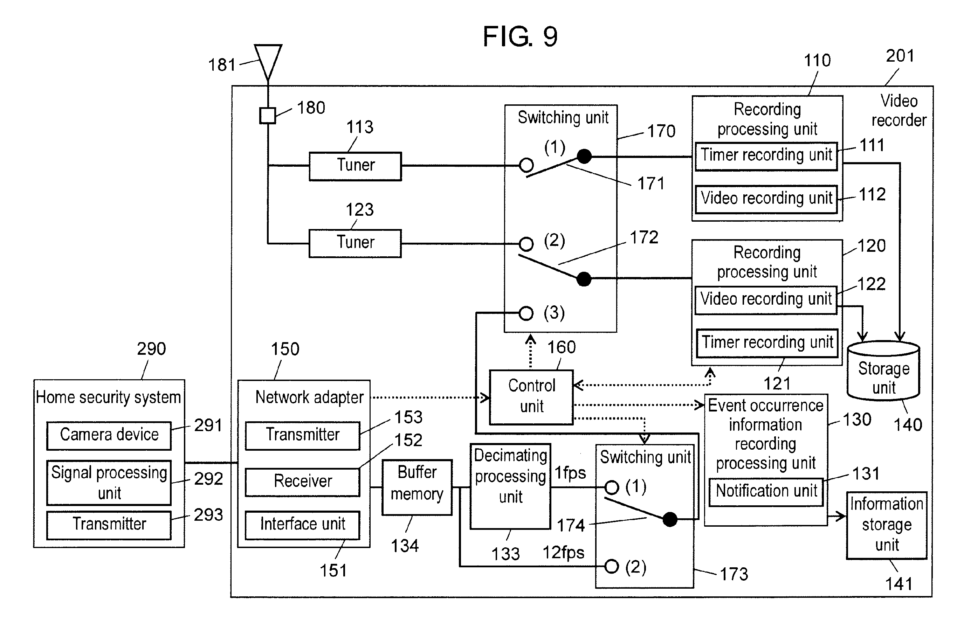

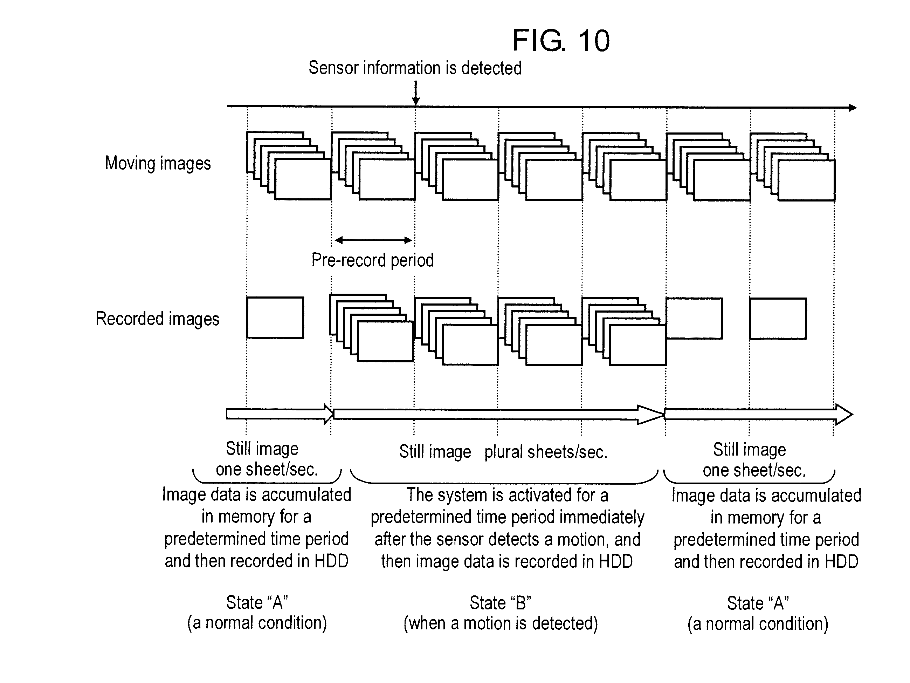

Video recorder 201 according to a third exemplary embodiment of the present invention will be described with reference to Figs. 9 and 10. The present exemplary embodiment differs from the second exemplary embodiment in the timing of changing the frame rate at which the image data captured by the surveillance camera is stored to storage unit 140. More specifically, in the second exemplary embodiment, the frame rate is changed from 12 fps to 1 fps when motion information is detected by the sensor as shown in Fig. 8. In the present exemplary embodiment, on the other hand, image information received before the time point when the motion information is detected by the sensor is also stored at 12 fps only for a predetermined time period. Fig. 9 is a block diagram showing the basic structure of video recorder 201 according to the third exemplary embodiment, and Fig. 10 is a time chart showing frame rates while the video recorder 201 is operating.

As shown in Fig. 9, video recorder 201 includes, in addition to the components of video recorder 101, buffer memory (delay unit) 134 as a delay means between network adapter 150 and switching unit 173. The other components are nearly the same as those in the second exemplary embodiment, and hence, labeled with the same numerals and the description thereof will be omitted.

In Fig. 9, the image information that has been captured by camera device 291 is delayed for a predetermined time period (pre-record period) in buffer memory 134 via network adapter 150, and then inputted to decimating processing unit 133. As a result, when a motion is detected by the sensor, and selector 174 of switching unit 173 is switched from the switch position (1) to the switch position (2) at the timing at which this information is received, the recording of the captured image data at 12 fps begins from a pre-record period of about five seconds as shown in Fig. 10.

The buffer memory for delaying captured image data received from camera device 291 is provided separately in the video recorder in the present exemplary embodiment, but may alternatively be replaced by an embedded memory of the decimating processing unit.

In the above description, storage unit 140 for recording broadcast data or the moving images captured by the door phone camera is provided separately from information storage unit 141 for recording event information, but these two units can be combined into a single storage unit.

As described hereinbefore, according to the third exemplary embodiment, the provision of buffer memory 134 for accumulating image information received from camera device 291 for the predetermined time period allows video recorder 201 to record the images captured before the sensor detects an abnormality. This ensures the recording of an abnormal image even if the detection of abnormality is slightly delayed.

The above-described exemplary embodiments are based on the assumption that the components of video recorders 1, 101, and 201 are all hardware components, but alternatively, some of them may be achieved by software components.

In the above-described exemplary embodiments, the household network is described as a power line communication (PLC), but may alternatively be other types of networks, for example, using Ethernet (registered trademark), wireless, or other technologies.

### INDUSTRIAL APPLICABILITY

The present invention, which allows the cooperation and effective use of the functions of the video recorder and the camera device, can be used in a household network system such as a door phone system or a home security system.

## Claims

1. A video recorder connected to a camera device, the video recorder comprising:
a broadcast receiver for receiving broadcast data:
a captured image receiver for receiving captured image data captured by the camera device;
a storage unit capable of storing the broadcast data received by the broadcast receiver and the captured image data received by the captured image receiver; and
an information storage unit for storing, when the storage unit does not store captured image data though the captured image receiver has received the captured image data, event occurrence information related to such a situation.

2. The video recorder of claim 1, wherein
the event occurrence information includes a message indicating that the captured image data has been received from the camera device.

3. The video recorder of claim 1, wherein
the event occurrence information includes thumbnail image data of the captured image data received from the camera device.

4. The video recorder of claim 1, wherein
the event occurrence information includes a reason why the storage unit does not store the captured image data.

5. The video recorder of claim 1, wherein
when the captured image receiver receives captured image data while the storage unit is storing broadcast data received by the broadcast receiver, the storage unit continues to store the broadcast data, and the information storage unit stores the event occurrence information.

6. The video recorder of claim 1, wherein
the broadcast receiver denotes a plurality of broadcast receivers, and
when the captured image data is received from the camera device while the storage unit is storing the broadcast data that all the plurality of broadcast receivers have concurrently received, the storage unit continues to store the broadcast data, and the information storage unit stores the event occurrence information.

7. The video recorder of claim 1, further comprising:
a frame rate determination unit for receiving motion information from a sensor for detecting a motion, and determining a frame rate of the captured image data to be stored in the storage unit based on the motion information from the sensor.

8. The video recorder of claim 7, wherein
the frame rate determination unit determines the frame rate by criteria which are different depending on time of day.

9. The video recorder of claim 7 or 8, further comprising:
a delay unit for delaying the captured image data received from the camera device for a predetermined time period, and outputting the delayed captured image data to the frame rate determination unit.

10. The video recorder of any one of claims 1 to 9, further comprising:
a copy unit for copying the captured image data received from the camera device from the storage unit to another storage medium.
